# EUROPEAN PATENT APPLICATION

(11) **EP 3 839 813 A1**
(43) Date of publication of application: **23.06.2021**
(21) Application number: 20209118.7
(22) Date of filing: 23.11.2020
(51) Int. Cl.: G06K 9/00

(54) **IN-VEHICLE DEVICE**

(30) Priority: 18.12.2019 JP 2019227834
(71) Applicant: YAZAKI CORPORATION, Minato-ku, Tokyo 108-8333 (JP)
(72) Inventor: SAITO, Daiki, Susono-shi, Shizuoka 410-1194 (JP); ISHII, Koji, Susono-shi, Shizuoka 410-1194 (JP); OKAMOTO, Shinichi, Susono-shi, Shizuoka 410-1194 (JP); MIYAKE, Hideto, Susono-shi, Shizuoka 410-1194 (JP)
(74) Representative: Grünecker Patent- und Rechtsanwälte PartG mbB

(57) **Abstract**

An in-vehicle device (1) includes an odor sensor (31), an odor type determination unit (32), and an operation decision unit (60). The odor sensor (31) is mounted on a vehicle (V) and detects an odor in the interior of the vehicle (V). The odor type determination unit (32) determines the type of the odor detected by the odor sensor (31). The operation decision unit (60) decides the operation of the vehicle (V) based on the type of the odor determined by the odor type determination unit (32). The operation decision unit (60) decides either a first operation of driving a power window (P) of a host vehicle (V) to deodorize the odor of the interior or a second operation of driving a traveling system actuator (Q) that makes the host vehicle (V) travel to direct the host vehicle (V) to an external cleaning center (N), for example, based on the type of the odor.

## Description

### BACKGROUND OF THE INVENTION

### 1. Field of the Invention

The present invention relates to an in-vehicle device.

### 2. Description of the Related Art

Conventionally, as an in-vehicle device, for example, International Publication No. 2018/230532 describes a vehicle system including an odor sensor that detects an odor inside a vehicle, a stain degree estimation unit that estimates the degree of a stain of the vehicle based on a detection result of the odor sensor, and a cleaning necessity determination unit that determines the necessity of cleaning based on a result estimated by the stain degree estimation unit.

Meanwhile, in the above vehicle system described in International Publication No. 2018/230532, the vehicle is cleaned when the cleaning necessity determination unit determines that cleaning is necessary, but there is a demand for measures more suitable for situations.

### SUMMARY OF THE INVENTION

Therefore, the present invention has been made in view of the above, and an object thereof is to provide an in-vehicle device capable of appropriately deal with an odor in the interior of a vehicle.

In order to achieve the above mentioned object, an in-vehicle device according to one aspect of the present invention includes a detection unit mounted on a vehicle to detect an odor in an interior of the vehicle; a determination unit configured to determine a type of the odor detected by the detection unit; and a decision unit configured to decide an operation of the vehicle based on the type of the odor determined by the determination unit.

According to another aspect of the present invention, in the in-vehicle device, it is preferable that the decision unit decides either a first operation of driving an odor deodorizing device of a host vehicle to deodorize the odor of the interior or a second operation of driving a traveling system actuator that makes the host vehicle travel to direct the host vehicle to an external cleaning center, based on the type of the odor.

According to still another aspect of the present invention, in the in-vehicle device, it is preferable that the decision unit requests an external management center for a substitute vehicle substituting for the host vehicle via a communication device in a case where an occupant is present in the vehicle when the second operation is decided, and decides not to request the external management center for the substitute vehicle substituting for the host vehicle via the communication device in a case where no occupant is present in the vehicle when the second operation is decided.

According to still another aspect of the present invention, in the in-vehicle device, it is preferable that the in-vehicle device further includes an imaging unit that captures the interior of the vehicle, wherein the decision unit decides an operation of the vehicle based on an image captured by the imaging unit and the type of the odor determined by the determination unit.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a block diagram illustrating a configuration example of an in-vehicle system according to an embodiment;
FIG. 2 is a view illustrating types of odors according to the embodiment; and
FIG. 3 is a flowchart illustrating an operation example of the in-vehicle system according to the embodiment.

### DETAILED DESCRIPTION OF THE PREFERRED EMBODIMENTS

A mode (embodiment) for carrying out the present invention will be described in detail with reference to the drawings. The present invention is not limited by contents described in the following embodiment. In addition, constituent elements described below include constituent elements that can be easily assumed by those skilled in the art and constituent elements that are substantially the same. Further, configurations described below can be appropriately combined. In addition, various omissions, substitutions, or changes of the configurations can be made within a scope not departing from a gist of the present invention.

### Embodiment

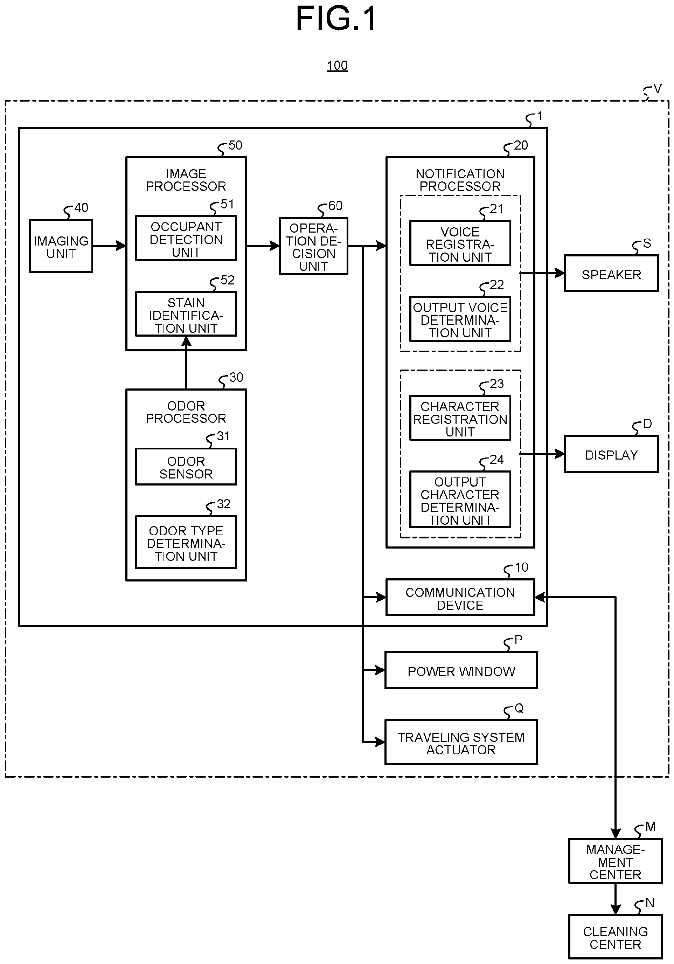

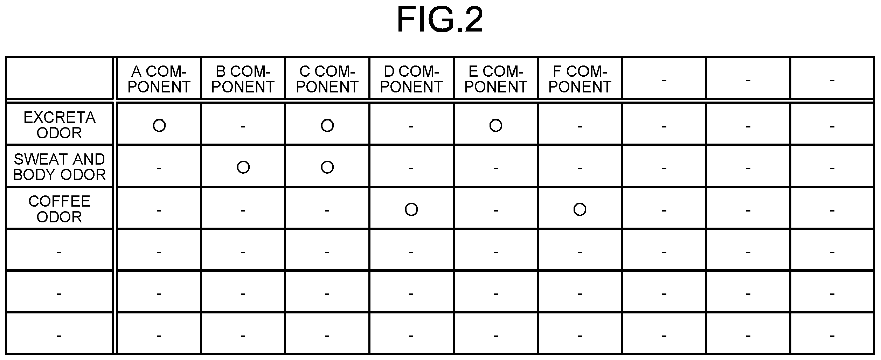

A vehicle system 100 according to an embodiment will be described with reference to the drawings. FIG. 1 is a block diagram illustrating a configuration example of the vehicle system 100 according to the embodiment. FIG. 2 is a view illustrating types of odors according to the embodiment. The vehicle system 100 is a system that suppresses remaining of an odor in the interior of a vehicle V for vehicle allocation. The vehicle V for vehicle allocation is, for example, an autonomously driving car such as a ride-sharing car, a bus, and a taxi. As illustrated in FIG. 1, the vehicle system 100 includes a management center M, a cleaning center N, and the vehicle V for vehicle allocation.

The management center M is a facility that manages the autonomously driving vehicles V such as ride-sharing cars, buses, and taxis, and allocates the vehicle V according to a request. The management center M registers the plurality of vehicles V in an identifiable manner, and manages states of the respective vehicles V. The management center M is connected to these vehicles V by wireless communication and can transmit and receive information to and from the vehicle V.

For example, when the management center M receives a request from a user who wants to use the vehicle V, the management center M dispatches the vehicle V to the user of the vehicle V by autonomous driving. In addition, when the allocated vehicle V becomes stained due to an odor, the management center M receives cleaning request information from the vehicle V. Here, the cleaning request information is information that requests cleaning of the vehicle V at the cleaning center N because it is difficult for the host vehicle V to deodorize the odor of a stain. The management center M is connected to the cleaning center N communicably and can transmit and receive information to and from the cleaning center N. When receiving the cleaning request information from the vehicle V, the management center M transmits cleaning reservation information indicating a reservation of cleaning of the vehicle V to the cleaning center N. In addition, the management center M can receive substitute vehicle request information from the allocated vehicle V. Here, the substitute vehicle request information is information indicating a request for a substitute vehicle in place of the host vehicle V. When the management center M receives the substitute vehicle request information from the vehicle V, the management center M dispatches an unallocated vehicle V to the vehicle V from which the substitute vehicle request information has been transmitted by autonomous driving.

The cleaning center N is a facility that cleans the vehicle V. The cleaning center N is connected to the management center M communicably and can transmit and receive information to and from the management center M. The cleaning center N can receive cleaning reservation information indicating a reservation for cleaning of the vehicle V from the management center M. When receiving the cleaning reservation information, the cleaning center N cleans the vehicle V based on the cleaning reservation information.

The vehicle V for vehicle allocation includes a speaker S, a display D, a power window P as an odor deodorizing device, a traveling system actuator Q, and an in-vehicle device 1.

The speaker S converts an electrical signal into sound. The speaker S is provided in the interior of the vehicle V so as to be capable of outputting the sound, and is connected to the in-vehicle device 1. The speaker S converts voice data output from the in-vehicle device 1 into a sound wave (voice) and outputs the converted sound data to the interior of the vehicle V. The speaker S, for example, converts pre-registered voice data into a sound wave (voice) and outputs the converted sound data to the interior of the vehicle V. The voice data recorded in advance has, for example, a content to notify that ventilation is performed in order to deodorize the odor in the interior of the vehicle V, and is registered in a voice registration unit 21 to be described later. An occupant of the vehicle V can notice the ventilation of the odor in the interior of the vehicle V by hearing the voice output from the speaker S.

The display D is a display that displays information. The display D is provided so as to be visually recognizable by the occupant of the vehicle V, and is connected to the in-vehicle device 1. The display D displays character data output from the in-vehicle device 1 as an image (a moving image or a still image). This image, for example, has a content to notify that ventilation is performed in order to deodorize the odor in the interior of the vehicle V, and is stored in advance in a character registration unit 23 to be described later. The occupant of the vehicle V can notice the ventilation of the odor in the interior of the vehicle V by visually recognizing the image displayed on the display D.

The power window P is a device that raises and lowers a window glass forming a boundary between the interior and the exterior of the vehicle V. The power window P can raise and lower the window glass by an operation of the occupant. In addition, the power window P is connected to the in-vehicle device 1 and can raise and lower the window glass under the control of the in-vehicle device 1. The power window P can communicate the interior space of the vehicle V with the exterior space by lowering the window glass, and can replace interior air of the vehicle V with exterior air. On the other hand, the power window P can block the interior space from the exterior space of the vehicle V by raising the window glass, and can confine interior air of the vehicle V to the interior.

The traveling system actuator Q makes the vehicle V travel. The traveling system actuator Q includes a drive unit such as an engine and a traveling motor, and a drive train (for example, a transmission, a drive shaft, or the like) that transmits the power of the drive unit to wheels. The traveling system actuator Q is connected to an operation decision unit 60, and makes the vehicle V travel based on a drive signal output from the operation decision unit 60.

The in-vehicle device 1 is a device that prevents the odor from remaining in the interior of the vehicle V. As illustrated in FIG. 1, the in-vehicle device 1 includes a communication device 10, a notification processor 20, an odor processor 30, an imaging unit 40, an image processor 50, and the operation decision unit 60.

The communication device 10 is a device capable of communicating with a communication network outside the vehicle V. The communication device 10 communicates with the management center M via, for example, an external communication network. The communication device 10 is connected to the operation decision unit 60, and transmits information indicating a measure of the vehicle V determined by the operation decision unit 60 to the management center M. For example, the communication device 10 transmits, to the management center M, the cleaning request information indicating that it is difficult for the host vehicle V to deodorize the odor and requesting the cleaning center N for cleaning of the vehicle V. In addition, the communication device 10 outputs information received from the management center M (for example, substitute vehicle arrangement information) to the operation decision unit 60.

The notification processor 20 processes a content that the occupant of the vehicle V is notified of. The notification processor 20 includes the voice registration unit 21, an output voice determination unit 22, the character registration unit 23, and an output character determination unit 24.

The voice registration unit 21 is a non-volatile memory storing information. In the voice registration unit 21, a plurality of pieces of voice data representing that, for example, ventilation is performed to deodorize the odor in the interior of the vehicle V, that a substitute vehicle has been arranged, and the like are registered in advance. The voice registration unit 21 is connected to the output voice determination unit 22, and the output voice determination unit 22 selects specific voice data from among the plurality of pieces of voice data.

The output voice determination unit 22 determines voice data to be output to the interior of the vehicle V. The output voice determination unit 22 is connected to the operation decision unit 60, and determines specific voice data from among the plurality of pieces of voice data registered in the voice registration unit 21 based on the measure determined by the operation decision unit 60. The output voice determination unit 22 is connected to the speaker S, and outputs the determined specific voice data to the speaker S.

The character registration unit 23 is a non-volatile memory storing information. In the character registration unit 23, a plurality of pieces of character data representing that, for example, ventilation is performed to deodorize the odor in the interior of the vehicle V, that a substitute vehicle has been arranged, and the like are registered in advance. The character registration unit 23 is connected to the output character determination unit 24, and the output character determination unit 24 selects specific character data from among the plurality of pieces of character data.

The output character determination unit 24 determines character data to be displayed in the interior of the vehicle V. The output character determination unit 24 is connected to the operation decision unit 60, and determines specific character data from among the plurality of pieces of character data registered in the character registration unit 23 based on the measure determined by the operation decision unit 60. The output character determination unit 24 is connected to the display D, and outputs the determined specific character data to the display D.

The odor processor 30 includes an odor sensor 31 and an odor type determination unit 32. The odor sensor 31 is a sensor that is mounted on the vehicle V and detects the odor in the interior of the vehicle V. The odor sensor 31 is installed on the ceiling, a seat, or the like in the interior of the vehicle V. The odor sensor 31 is, for example, a crystal oscillator type sensor. In this crystal oscillator type sensor, a film that reacts to an odor is provided on a surface of the crystal oscillator. When an odorous substance adheres to the film, a frequency of the crystal oscillator changes to detect an odor component. The odor sensor 31 detects, for example, ammonia, hydrogen sulfide, methyl sulfide, and the like as the odor components. The odor sensor 31 also detects the concentration of the odorous substance based on the amount of the odorous substance adhering to the film. The odor sensor 31 is connected to the odor type determination unit 32, and outputs the detected odor component and its concentration to the odor type determination unit 32.

The odor type determination unit 32 determines a type of the odor. The odor type determination unit 32 is connected to the odor sensor 31 and determines the type of the odor based on the odor component and its concentration detected by the odor sensor 31. Here, a table illustrating a relationship between an odor component (including a concentration of the odor component) and a type of an odor is stored in a storage unit (not illustrated), for example, as illustrated in FIG. 2. The odor type determination unit 32 refers to the table stored in this storage unit, and determines the type of the odor based on the odor component (including the concentration of the odor component) detected by the odor sensor 31. The odor type determination unit 32 determines, for example, that the type of the odor is an "excreta odor" when the odor component contains an A component, a C component, an E component, and the like at a predetermined concentration. In addition, the odor type determination unit 32 determines that the type of the odor is a "coffee odor" when the odor component contains a D component, an F component, and the like at a predetermined concentration. Then, the odor type determination unit 32 determines that the intensity of the odor is relatively strong when the overall concentration of the odor components is relatively high, and determines that the intensity of the odor is relatively weak when the overall concentration of the odor components is relatively low. The odor type determination unit 32 is connected to the image processor 50, and outputs the determined odor type and the intensity thereof to the image processor 50.

The imaging unit 40 is a camera that captures an image (a moving image or a still image). One or a plurality of the imaging units 40 are installed in the interior of the vehicle V to capture the interior of the vehicle V. One or the plurality of imaging units 40 are set to have an angle of view capable of capturing the entire interior of the vehicle V. While the vehicle V is in use, the imaging unit 40 captures the interior of the vehicle V regardless of whether the vehicle V is traveling or being stopped. The imaging unit 40 is connected to the image processor 50 and outputs the captured image to the image processor 50.

The image processor 50 processes the image. The image processor 50 includes an occupant detection unit 51 and a stain identification unit 52.

The occupant detection unit 51 detects the occupant in the vehicle V based on the image. The occupant detection unit 51 detects an occupant using, for example, a well-known image recognition technique such as a pattern recognition technique for recognizing an object based on a feature of an image. The occupant detection unit 51 is connected to the imaging unit 40, and detects the presence or absence of the occupant in the vehicle V based on the image of the interior of the vehicle V captured by the imaging unit 40. The occupant detection unit 51 is connected to the operation decision unit 60, and outputs detected occupant detection information indicating the presence or absence of the occupant to the operation decision unit 60.

The stain identification unit 52 identifies an object generating an odor. The stain identification unit 52 is connected to the odor processor 30 and the imaging unit 40, and identifies the object generating the odor based on the type and intensity of the odor output from the odor processor 30 and the interior image output from the imaging unit 40.

For example, in the case where the type of the odor is the excreta odor, the stain identification unit 52 identifies the object generating the odor is a stain representing excreta when the stain representing the excreta is detected from the interior image. In addition, for example, in the case where the type of the odor is the coffee odor, the stain identification unit 52 identifies that the object generating the odor is a stain generated by spilled coffee when the stain generated by spilled coffee is detected from the interior image. On the other hand, in the case where the type of the odor is the coffee odor, the stain identification unit 52 identifies that the coffee odor is not an odor to be deodorized when an occupant drinking coffee is detected from the interior image rather than the stain generated by spilled coffee. The stain identification unit 52 is connected to the operation decision unit 60, and outputs odorous object information representing the object generating the odor to the operation decision unit 60.

The operation decision unit 60 decides an operation of the vehicle V based on the odorous object information output from the stain identification unit 52. When deciding that the interior odor can be deodorized by the host vehicle V based on the odorous object information, the operation decision unit 60 deodorizes the interior odor by the host vehicle V. On the other hand, when deciding that it is difficult to deodorize the interior odor by the host vehicle V based on the odorous object information, the operation decision unit 60 deodorizes the odor at an external facility.

For example, the odorous object information represents a coffee odor (stain) and it has been decided that the interior odor can be deodorized by the host vehicle V, the operation decision unit 60 performs a first operation of driving the power window P of the host vehicle V to deodorize the interior odor. In this case, the operation decision unit 60 drives, for example, the power window P to lower the window glass such that the interior space of the vehicle V and the exterior space communicate with each other, ventilates the vehicle V by replacing the interior air with the exterior air to deodorize the coffee odor in the interior.

In addition, when it has been decided that the odorous object information represents the excreta odor and it is difficult for the host vehicle V to deodorize the interior odor, the operation decision unit 60 transmits the cleaning request information to the management center M via the communication device 10. Then, when it is difficult for the host vehicle V to deodorize the interior odor, the operation decision unit 60 performs a second operation of transmitting a drive signal to the traveling system actuator Q to drive the traveling system actuator Q to direct the host vehicle V to the external cleaning center N. At this time, the operation decision unit 60 determines the presence or absence of an occupant existing in the interior based on the occupant detection information output from the occupant detection unit 51. Then, when there is the occupant in the interior, the operation decision unit 60 requests the external management center M for a substitute vehicle to replace the host vehicle V via the communication device 10. The operation decision unit 60 transmits, for example, the substitute vehicle request information for requesting a substitute vehicle to the management center M via the communication device 10. On the other hand, the operation decision unit 60 decides not to request the external management center M for the substitute vehicle to replace the host vehicle V via the communication device 10 when there is no occupant in the interior. That is, the operation decision unit 60 does not transmit the substitute vehicle request information requesting the substitute vehicle to the management center M via the communication device 10.

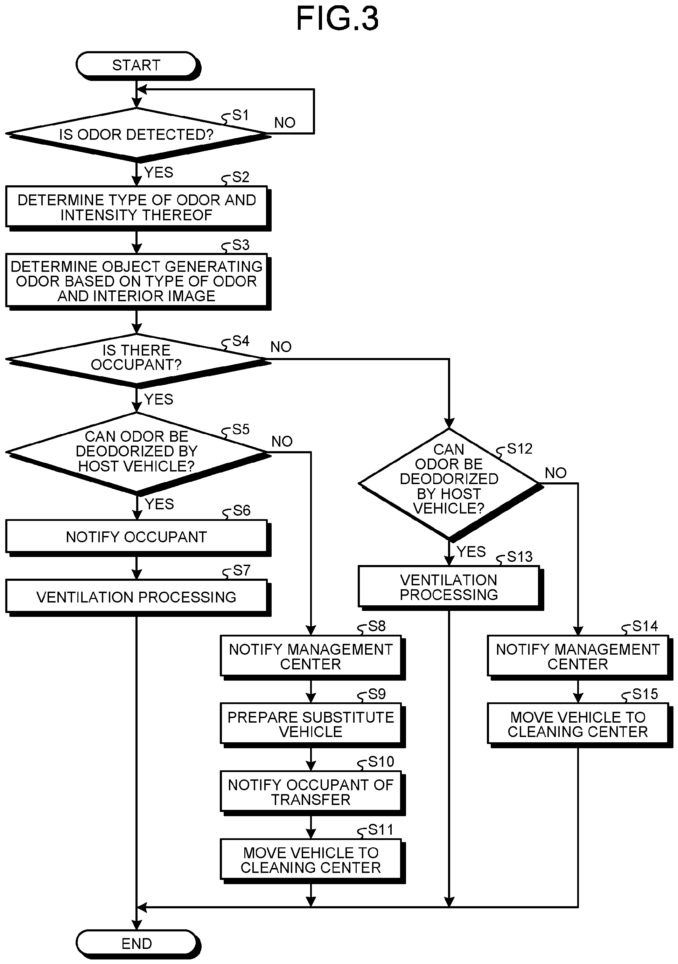

Next, an operation example of the vehicle system 100 will be described. FIG. 3 is a flowchart illustrating the operation example of the vehicle system 100 according to the embodiment. As illustrated in FIG. 3, in the vehicle system 100, the odor sensor 31 of the allocated vehicle V detects the odor in the interior of the vehicle V (Step S1). The odor sensor 31 repeats the process of detecting the odor when no odor in the interior of the vehicle V is detected (Step S1; No). When detecting the odor in the interior of the vehicle V (Step S1; Yes), the odor sensor 31 outputs the detected odor component and its concentration to the odor type determination unit 32.

The odor type determination unit 32 determines the type of the odor and the intensity thereof based on the odor component and its concentration output by the odor sensor 31 (Step S2). The odor type determination unit 32 refers to FIG. 2, for example, and determines that the type of the odor is the "coffee odor" when the odor component contains the D component, the F component, and the like at a predetermined concentration. Then, the odor type determination unit 32 determines that the intensity of the odor is relatively strong when the overall concentration of the odor components is relatively high, and determines that the intensity of the odor is relatively weak when the overall concentration of the odor components is relatively low. Next, the stain identification unit 52 identifies the object generating the odor based on the type (including the intensity) of the odor determined by the odor type determination unit 32 and the interior image captured by the imaging unit 40 (Step S3). For example, in the case where the type of the odor is the coffee odor, the stain identification unit 52 identifies that the object generating the odor is a stain generated by spilled coffee when the stain generated by spilled coffee is detected from the interior image.

Next, the operation decision unit 60 determines whether or not the occupant is present in the interior based on the occupant detection information output from the occupant detection unit 51 (Step S4). When the occupant is present in the interior (Step S4; Yes), the operation decision unit 60 determines whether or not deodorization can be performed by the host vehicle V (Step S5). When the deodorization can be performed by the host vehicle V in the case where the occupant is present in the interior (Step S5; Yes), the operation decision unit 60 notifies the occupant that ventilation is to be performed to deodorize the odor in the vehicle V (Step S6). For example, the operation decision unit 60 controls the notification processor 20, outputs a voice representing a content indicating that the ventilation is to be performed from the speaker S, and displays an image representing the content indicating that the ventilation is to be performed on the display D. Next, the operation decision unit 60 performs ventilation processing (Step S7). The operation decision unit 60 drives, for example, the power window P to lower the window glass such that the interior space of the vehicle V and the exterior space communicate with each other, ventilates the vehicle V by replacing the interior air with the exterior air, and ends the processing.

In Step S5 above, the operation decision unit 60 notifies the management center M (Step S8) when the occupant is present in the interior and it is difficult for the host vehicle V to perform deodorization (Step S5; No). The operation decision unit 60 transmits, for example, the cleaning request information requesting the cleaning center N for cleaning the vehicle V and the substitute vehicle request information indicating the request for the substitute vehicle to the management center M. When receiving the cleaning request information from the vehicle V, the management center M transmits cleaning reservation information indicating a reservation of cleaning the vehicle V to the cleaning center N. In addition, when receiving the substitute vehicle request information from the vehicle V, the management center M dispatches an unallocated vehicle V to the vehicle V to which the substitute vehicle request information has been transmitted by autonomous driving (Step S9).

Next, the operation decision unit 60 notifies the occupant of transfer (Step S10). The operation decision unit 60 controls, for example, the notification processor 20 to output a voice representing the transfer to the substitute vehicle from the speaker S, and to display an image representing the transfer to the substitute vehicle on the display D. Next, the operation decision unit 60 moves the vehicle V to the cleaning center N (Step S11). For example, the operation decision unit 60 transmits a drive signal to the traveling system actuator Q to drive the traveling system actuator Q, directs the host vehicle V to the cleaning center N, and ends the processing.

When the occupant is not present in the interior in Step S4 (Step S4; No), the operation decision unit 60 determines whether or not deodorization can be performed by the host vehicle V (Step S12). The operation decision unit 60 performs ventilation processing (Step S13) when the occupant is not present in the interior and the deodorization can be performed by the host vehicle V (Step S12; Yes). The operation decision unit 60 drives, for example, the power window P to lower the window glass such that the interior space of the vehicle V and the exterior space communicate with each other, ventilates the vehicle V by replacing the interior air with the exterior air, and ends the processing. The operation decision unit 60 notifies the management center M (Step S14) when the occupant is not present in the interior and it is difficult for the host vehicle V to perform deodorization (Step S12; No). The operation decision unit 60 transmits, for example, the cleaning request information requesting the cleaning center N for cleaning the vehicle V to the management center M. Since the occupant is not present in the interior, the operation decision unit 60 does not request the substitute vehicle. When receiving the cleaning request information from the vehicle V, the management center M transmits cleaning reservation information indicating a reservation of cleaning the vehicle V to the cleaning center N. Next, the operation decision unit 60 moves the vehicle V to the cleaning center N (Step S15). For example, the operation decision unit 60 transmits a drive signal to the traveling system actuator Q to drive the traveling system actuator Q, directs the host vehicle V to the cleaning center N, and ends the processing.

As described above, the in-vehicle device 1 according to the embodiment includes the odor sensor 31, the odor type determination unit 32, and the operation decision unit 60. The odor sensor 31 is mounted on the vehicle V and detects the odor in the interior of the vehicle V. The odor type determination unit 32 determines the type of the odor detected by the odor sensor 31. The operation decision unit 60 decides the operation of the vehicle V based on the type of the odor determined by the odor type determination unit 32. With this configuration, the in-vehicle device 1 can cause the vehicle V to perform an appropriate operation according to the type of the odor. The in-vehicle device 1 can, for example, perform deodorization by the vehicle V or move the vehicle V to the cleaning center N according to the type of the odor. As a result, there is a case where the in-vehicle device 1 can perform deodorization without cleaning the vehicle V depending on the type of the odor, and the efficiency of vehicle allocation is likely to deteriorate if the vehicle V is cleaned in this case. However, the deterioration in allocation efficiency is suppressed by performing deodorization by the host vehicle V. As a result, the in-vehicle device 1 can appropriately deal with the odor in the interior of the vehicle V, and can suppress the deterioration in vehicle allocation efficiency due to the odor. In addition, the in-vehicle device 1 can prevent the odor from remaining in the interior of the vehicle V, so that the occupant can get on the vehicle comfortably. In addition, since the in-vehicle device 1 notifies the management center M of a stain caused by the odor, the stain can be dealt with appropriately, and improvement in work efficiency at the time of maintaining the vehicle V can be expected.

In the in-vehicle device 1, the operation decision unit 60 decides either the first operation of driving a power window P of a host vehicle V to deodorize the odor of the interior or the second operation of driving a traveling system actuator Q that makes the host vehicle V travel to direct the host vehicle V to an external cleaning center N based on the type of the odor. With this configuration, the in-vehicle device 1 can suppress the deterioration in vehicle allocation efficiency due to the odor, as the host vehicle V performs deodorization depending on the type of the odor. In addition, the in-vehicle device 1 can reliably deodorize the odor by cleaning at the cleaning center N depending on the type of the odor.

In the in-vehicle device 1, the operation decision unit 60 requests the external management center M for the substitute vehicle substituting for the host vehicle V via the communication device 10 in the case where the occupant is present in the vehicle V when the second operation is decided, and decides not to request the external management center M for the substitute vehicle substituting for the host vehicle V via the communication device 10 in the case where no occupant is present in the vehicle V when the second operation is decided. With this configuration, the in-vehicle device 1 can provide another vehicle V to the occupant even if the vehicle V is directed to the cleaning center N, and can prevent the occupant from being unable to board the vehicle V.

The above in-vehicle device 1 further includes the imaging unit 40 that captures the interior of the vehicle V, and the operation decision unit 60 decides the operation of the vehicle V based on the image captured by the imaging unit 40 and the type of the odor determined by the odor type determination unit 32. With this configuration, the in-vehicle device 1 can identify the object generating the odor, and can more appropriately decide the operation of the vehicle V based on the identified object.

### Modifications

Note that the above description has been given regarding the example in which the vehicle V for vehicle allocation is a car that autonomously drives, but the present invention is not limited thereto, and the vehicle V may be a car driven by a driver.

Although the example in which the odor sensor 31 is a crystal oscillator type sensor has been described, another sensor may be used without being limited thereto. For example, the odor sensor 31 may be a semiconductor type sensor that identifies an odor component based on a change of a resistance value in a semiconductor due to the adsorption of an odorous substance on a surface of the semiconductor and the surface reaction.

The in-vehicle device 1 has been described with the example in which the first operation is the operation of driving the power window P of the host vehicle V to deodorize the odor in the interior based on the type of the odor, but any other operation may be performed without being limited thereto. As the first operation, the in-vehicle device 1 may drive an air purifier of the host vehicle V to deodorize the odor in the interior and may recommend the occupant to use a deodorant spray through the speaker S and the display D.

The in-vehicle device 1 has been described with the example in which the second operation is the operation of driving the traveling system actuator Q that makes the host vehicle V travel to direct the host vehicle V to the external cleaning center N based on the type of the odor, but any other operation may be performed without being limited thereto. As the second operation, the in-vehicle device 1 may be directed to the management center M, or may be directed to another facility (a repair shop, or the like).

The description has been given regarding the example in which the operation decision unit 60 requests the management center M for the substitute vehicle in the case where the occupant is present in the vehicle V when the second operation of directing the host vehicle V to the cleaning center N is decided, but the present invention is not limited thereto, and the request to the management center M for the substitute vehicle is not necessarily made.

The description has been given regarding the example in which the operation decision unit 60 decides the operation of the vehicle V based on the image captured by the imaging unit 40 and the type of the odor determined by the odor type determination unit 32, but the present invention is not limited thereto. The operation of the vehicle V may be determined based on the type of the odor determined by the odor type determination unit 32 without using the image captured by the imaging unit 40.

The description has been given regarding the example in which the operation decision unit 60 notifies the occupant through the speaker S and the display D, but the present invention is not limited thereto, and the notification may be issued to a mobile phone of the occupant.

The description has been given regarding the example in which the operation decision unit 60 is provided in the in-vehicle device 1, but the present invention is not limited thereto, and the operation decision unit 60 may be provided in, for example, a server (cloud server) outside the vehicle V.

Since the in-vehicle device according to the embodiment determines an operation of the vehicle based on a type of the odor, it is possible to appropriately deal with the odor in the interior of the vehicle.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An in-vehicle device (1) comprising:
a detection unit (31) mounted on a vehicle (V) to detect an odor in an interior of the vehicle (V);
a determination unit (32) configured to determine a type of the odor detected by the detection unit (31); and
a decision unit (60) configured to decide an operation of the vehicle (V) based on the type of the odor determined by the determination unit (32).

2. The in-vehicle device (1) according to claim 1, wherein
the decision unit (60) decides either a first operation of driving an odor deodorizing device (P) of a host vehicle (V) to deodorize the odor of the interior or a second operation of driving a traveling system actuator (Q) that makes the host vehicle (V) travel to direct the host vehicle (V) to an external cleaning center (N), based on the type of the odor.

3. The in-vehicle device (1) according to claim 2, wherein
the decision unit (60) requests an external management center (M) for a substitute vehicle substituting for the host vehicle (V) via a communication device (10) in a case where an occupant is present in the vehicle when the second operation is decided, and decides not to request the external management center (M) for the substitute vehicle substituting for the host vehicle (V) via the communication device (10) in a case where no occupant is present in the vehicle when the second operation is decided.

4. The in-vehicle device (1) according to any one of claims 1 to 3, further comprising:
an imaging unit (40) that captures the interior of the vehicle, wherein
the decision unit (60) decides an operation of the vehicle based on an image captured by the imaging unit (40) and the type of the odor determined by the determination unit (32).
